# EUROPÄISCHE PATENTANMELDUNG

(11) **EP 2 219 286 A1**
(43) Veröffentlichungstag der Anmeldung: **18.08.2010**
(21) Anmeldenummer: 10152307.4
(22) Anmeldetag: 01.02.2010
(51) Int. Cl.: H02M 7/08, H05B 33/08

(54) **Schaltungsanordnung zum Umwandeln einer Eingangswechselspannung in eine Gleichspannung, Nachrüstlampe mit solch einer Schaltungsanordnung, sowie Beleuchtungssystem**

(30) Priorität: 12.02.2009 DE 102009008635
(71) Anmelder: Osram Gesellschaft mit beschränkter Haftung, 81536 München (DE)
(72) Erfinder: Dellian, Harald, 83533, Edling (DE); Sowa, Wolfram, 81739, München (DE)

(57) **Zusammenfassung**

Die Erfindung betrifft eine Schaltungsanordnung zum Umwandeln einer Eingangswechselspannung in eine Gleichspannung, mit einem Eingang, in den die Eingangswechselspannung eingegeben wird, und einem Ausgang, an den eine Last anschließbar ist, wobei die Schaltungsanordnung einen ersten und einen zweiten Speicherkreis mit je mindestens einer Induktivität und je mindestens einer Kapazität, sowie ein Diodennetzwerk aufweist. Die Erfindung betrifft ebenfalls eine Schaltungsanordnung zum Umwandeln einer Eingangswechselspannung in eine Gleichspannung, mit einem Eingang, in den die Eingangswechselspannung eingegeben wird, und einem Ausgang, an den eine Last anschließbar ist, wobei die Schaltungsanordnung zwei Spannungswandler aufweist, in die die Eingangswechselspannung eingegeben wird, und die Spannungswandler in Bezug auf die Eingangswechselspannung komplementär arbeiten und synchron mit ihr getaktet sind.

Die Erfindung betrifft ebenfalls eine Nachrüstlampe mit mindestens einer Halbleiterlichtquelle zum Betreiben an einer Wechselspannung, wobei die Nachrüstlampe eine der oben genannten Schaltungsanordnungen aufweist, und der Eingang der Schaltungsanordnung mit der Wechselspannung verbunden ist, und am Ausgang der Schaltungsanordnung eine Spannung zum Betreiben der mindestens einen Halbleiterlichtquelle anliegt.

Die Erfindung betrifft weiterhin ein Beleuchtungssystem mit einem elektronischen Transformator für Niedervolt-Halogenlampen, wobei das Beleuchtungssystem eine oben genannte Nachrüstlampe aufweist, und die Nachrüstlampe an den elektronischen Transformator für Niedervolt-Halogenlampen angeschlossen ist.

## Beschreibung

Schaltungsanordnung zum Umwandeln einer Eingangswechselspannung in eine Gleichspannung, Nachrüstlampe mit solch einer Schaltungsanordnung, sowie Beleuchtungssystem.

### Technisches Gebiet

Die Erfindung betrifft eine Schaltungsanordnung zum Umwandeln einer Eingangswechselspannung in eine Gleichspannung, mit einem Eingang, in den die Eingangswechselspannung eingegeben wird, und einem Ausgang, an den eine z.B. kapazitive Last anschließbar ist. Die Erfindung betrifft ebenfalls eine Nachrüstlampe, sogenannte Retrofitlampe, mit mindestens einer Leuchtdiode zum Betreiben an einer Wechselspannung. Die Erfindung betrifft weiterhin ein Beleuchtungssystem mit einem elektronischen Transformator, der eine amplitudenmodulierte Wechselspannung erzeugt, für Niedervolt-Halogenlampen.

### Stand der Technik

Die Erfindung geht aus von einer Schaltungsanordnung zum Umwandeln einer Eingangswechselspannung in eine Gleichspannung nach der Gattung des Hauptanspruchs.

Aus der US 6380693B1 ist ein paralleler Betrieb von Niedervolt-Halogenlampen und LED-Nachrüstlampen bekannt. Das Problem der effizienten Strombegrenzung zum Betrieb der Leuchtdioden wurde dort jedoch nicht gelöst, sondern es wurden dort lediglich Widerstände zur Strombegrenzung vorgesehen. Durch den Parallelbetrieb von Leuchtdioden und Niedervolt-Halogenlampen fällt die aufgenommene Leistung der Leuchtmittel unterhalb der notwendigen Leistungsaufnahme, die z.B. ein elektronischer Transformator für Niedervolt-Halogenlampen benötigt, um funktionieren zu können. Elektronische Transformatoren für Niedervolt-Halogenlampen weisen üblicherweise als Ausgangssignal keine Gleichspannung auf, sondern betreiben die Niedervolt-Halogenlampen mit einer Wechselspannung. Diese Wechselspannung weist eine hohe Frequenz auf, die üblicherweise der Taktfrequenz des elektronischen Transformators entspricht, und ist mit der Eingangsnetzfrequenz amplitudenmoduliert.

Aus der EP 1 076 476 A2 ist eine Vorrichtung zum Betreiben mindestens einer Leuchtdiode bekannt, die an einen elektronischen Transformator für Halogenlampen angeschlossen werden kann, wobei die Vorrichtung einen Gleichrichter und einen Speicherkreis enthält.

Das grundsätzliche Problem, eine oder mehrere Leuchtdioden an einem elektronischen Transformator für Niedervolt-Halogenlampen zu betreiben besteht darin, dem elektronischen Transformator für Niedervolt-Halogenlampen eine resistive Last zu bieten. Viele elektronische Transformatoren für Niedervolt-Halogenlampen sind so geregelt, dass der Laststrom der Spannung folgen muss, da die Transformatoren sonst einen Fehlerfall annehmen und abschalten. Der Laststrom kann der Spannung nur folgen, indem ein resistives Verhalten im System als Last angenommen wird.

Bei der in der EP 1 076 476 A2 offenbarten Vorrichtung wird mit beiden Halbwellen der Eingangswechselspannung U_{ET} immer ein Speicherkondensator C1 aufgeladen, der sich dadurch nie komplett entlädt. Das führt wiederum zu einer pulsförmigen Stromaufnahme, die bei vielen elektronischen Transformatoren nicht funktioniert. Hinzu kommt, dass hier Widerstände zur Strombegrenzung vorgesehen sind, die Verluste verursachen und somit unerwünscht sind.

### Aufgabe

Es ist Aufgabe der Erfindung, eine Schaltungsanordnung zum Umwandeln einer Amplitudenmodulierten Eingangswechselspannung in eine Gleichspannung anzugeben, mit einem Eingang, in den die Eingangswechselspannung eingegeben wird, und einem Ausgang, an den eine Last anschließbar ist, die eine der Spannung folgende Stromaufnahme aufweist.

Es ist ebenfalls Aufgabe der Erfindung, eine Nachrüstlampe mit mindestens einer Leuchtdiode zum Betreiben an einer Wechselspannung anzugeben, die ohne zusätzliche herkömmliche Last (z.B. eine Halogenlampe) an einen elektronischen Transformator anschließbar ist.

Schließlich ist es Aufgabe der Erfindung, ein Beleuchtungssystem mit einem elektronischen Transformator für Niedervolt-Halogenlampen anzugeben, das anstatt der Halogenlampen mit Halbleiterlichtquellen arbeitet.

### Darstellung der Erfindung

Die Lösung der Aufgabe erfolgt in einer ersten Ausführungsform erfindungsgemäß mit einer Schaltungsanordnung zum Umwandeln einer Eingangswechselspannung in eine Gleichspannung, mit einem Eingang, in den die Eingangswechselspannung eingegeben wird, und einem Ausgang, an den eine Last anschließbar ist, wobei die Schaltungsanordnung einen ersten und einen zweiten Speicherkreis mit je mindestens einer Induktivität und je mindestens einer Kapazität, sowie ein Diodennetzwerk aufweist. Dadurch, dass die Schaltungsanordnung zwei Speicherkreise aufweist, kann immer ein Speicherkreis komplett entladen werden, während der andere Speicherkreis gerade geladen wird, so dass beim nächsten Ladevorgang des vorher entladenen Speicherkreises auch schon bei kleinsten Spannungen ein Ladestrom fließt.

Vorzugsweise ist das Diodennetzwerk so gestaltet, dass der erste Speicherkreis jeweils bei der positiven Halbwelle der Eingangswechselspannung geladen wird, sowie bei der negativen Halbwelle der Eingangswechselspannung entladen wird, und der zweite Speicherkreis jeweils bei der negativen Halbwelle der Eingangswechselspannung geladen wird, sowie bei der positiven Halbwelle der Eingangswechselspannung entladen wird. Durch diese Maßnahme kann Am Ausgang eine gleichmäßige Leistung entnommen werden, obwohl jedes Speicherelement in den beiden Speicherkreisen immer zyklisch komplett entladen wird.

Bevorzugt weist das Diodennetzwerk noch einen Vollwellengleichrichter auf, der wechselspannungsseitig mit dem Eingang und gleichspannungsseitig mit dem Ausgang verbunden ist. Mit dieser Maßnahme wird der Ausgang nicht nur über die Speicherkreise mit Leistung versorgt, sondern auch direkt, somit können die Bauteilewerte der Speicherkreise klein und kostengünstig dimensioniert werden.

Die Lösung der Aufgabe erfolgt in einer zweiten Ausführungsform erfindungsgemäß mit einer Schaltungsanordnung zum Umwandeln einer Eingangswechselspannung in eine Gleichspannung, mit einem Eingang, in den die Eingangswechselspannung eingegeben wird, und einem Ausgang, an den eine Last anschließbar ist, dadurch gekennzeichnet, dass die Schaltungsanordnung zwei Spannungswandler aufweist, in die die Eingangswechselspannung eingegeben wird, und die Spannungswandler in Bezug auf die Eingangswechselspannung komplementär arbeiten und synchron mit ihr getaktet sind. Die komplementäre Arbeitsweise garantiert eine stetige Stromaufnahme, durch die synchrone Taktung folgt die Stromaufnahme der Spannung, somit wird auch hier eine resistive Last simuliert.

Als komplementär arbeitende Spannungswandler werden hier zwei Spannungswandler angesehen, die wechselseitig arbeiten, d.h. der Schalter des ersten Spannungswandlers leitet während der positiven Halbwelle, der Schalter des zweiten Spannungswandlers leitet während der negativen Halbwelle.

Die Spannungswandler sind bevorzugt Sperrwandler oder Inverswandler. Dies hat den Vorteil, dass auch Lasten betrieben werden können, die eine höhere Spannung als die Eingangsspannung benötigen. Die Spannungswandler können aber auch tiefsetzende Spannungswandler sein. Damit können dann Lasten betrieben werden, die eine niedrigere Spannung als die Eingangsspannung benötigen. Die Schalter der Spannungswandler sind dabei bevorzugt als Transistoren ausgebildet. Da die Spannungswandler komplementär zueinander arbeiten, sind die Transistoren der Spannungswandler bevorzugt ebenfalls komplementär zueinander. Dadurch wird eine einfache Ansteuerung sichergestellt.

Die Lösung der Aufgabe bezüglich der Nachrüstlampe erfolgt mit einer Nachrüstlampe mit mindestens einer Halbleiterlichtquelle zum Betreiben an einer Wechselspannung, dadurch gekennzeichnet, dass die Nachrüstlampe eine Schaltungsanordnung mit den Merkmalen der ersten Ausführungsform oder eine Schaltungsanordnung mit den Merkmalen der zweiten Ausführungsform aufweist, wobei der Eingang der Schaltungsanordnung mit der Wechselspannung verbunden ist, und am Ausgang der Schaltungsanordnung eine Spannung zum Betreiben der mindestens einen Leuchtdiode anliegt.

Die Nachrüstlampe ist dabei bevorzugt an einer hochfrequenten Wechselspannung betreibbar, die von einem elektronischen Transformator für Niedervolt-Halogenlampen bereitgestellt wird. Elektronische Transformatoren erzeugen üblicherweise eine Wechselspannung, die eine hohe modulierte Frequenz aufweist und gleichzeitig mit einer niedrigen Frequenz amplitudenmoduliert ist. Die hohe Frequenz ist dabei die Taktfrequenz des Wandlers des elektronischen Trafos, die niedrige Taktfrequenz ist die Netzfrequenz. Das Ausgangssignal des elektronischen Transformators hat somit einen AM-Anteil sowie einen FM-Anteil.

Die Lösung der Aufgabe bezüglich des Beleuchtungssystems erfolgt mit einem Beleuchtungssystem mit einem elektronischen Transformator für Niedervolt-Halogenlampen, wobei das Beleuchtungssystem eine Nachrüstlampe mit oben genannten Merkmalen aufweist, und die Nachrüstlampe an den elektronischen Transformator für Niedervolt-Halogenlampen angeschlossen ist

Weitere vorteilhafte Weiterbildungen und Ausgestaltungen der Erfindung ergeben sich aus weiteren abhängigen Ansprüchen und aus der folgenden Beschreibung.

### Kurze Beschreibung der Zeichnung(en)

Die Erfindung wird nachstehend anhand von Ausführungsbeispielen näher erläutert. Es zeigen:

Fig. 1 einen Spannungsverlauf, wie er von einem elektronischen Transformator ausgegeben wird,

Fig. 2 eine Schaltungsanordnung zum Umwandeln einer Eingangswechselspannung in eine Gleichspannung in einer ersten Ausführungsform,

Fig. 3 einige wichtige Spannungs- und Stromverläufe der Schaltungsanordnung,

Fig. 4 ein schematisches Schaltbild einer Schaltungsanordnung zum Umwandeln einer Eingangswechselspannung in eine Gleichspannung in einer ersten Ausbildung einer zweiten Ausführungsform mit einer zweigeteilten Last,

Fig. 5 ein schematisches Schaltbild einer Schaltungsanordnung zum Umwandeln einer Eingangswechselspannung in eine Gleichspannung in einer zweiten Ausbildung einer zweiten Ausführungsform mit einer zweigeteilten Last,

Fig. 6 ein Schaltbild einer Schaltungsanordnung zum Umwandeln einer Eingangswechselspannung in eine Gleichspannung in einer ersten Ausbildung einer zweiten Ausführungsform mit einer zweigeteilten Last und einem Transistor als Schalter,

Fig. 7 ein Schaltbild einer Schaltungsanordnung zum Umwandeln einer Eingangswechselspannung in eine Gleichspannung in einer zweiten Ausbildung einer zweiten Ausführungsform mit einer zweigeteilten Last und einem Transistor als Schalter,

Fig. 8 in Schaltbild einer Schaltungsanordnung zum Umwandeln einer Eingangswechselspannung in eine Gleichspannung in einer zweiten Ausbildung einer zweiten Ausführungsform mit einer einteiligen Last und einem Transistor als Schalter,

Fig. 9 ein Schaltbild einer Schaltungsanordnung zum Umwandeln einer Eingangswechselspannung in eine Gleichspannung in einer ersten Ausbildung einer zweiten Ausführungsform mit einer einteiligen Last und einem Transistor als Schalter.

### Bevorzugte Ausführung der Erfindung

### Erste Ausführungsform

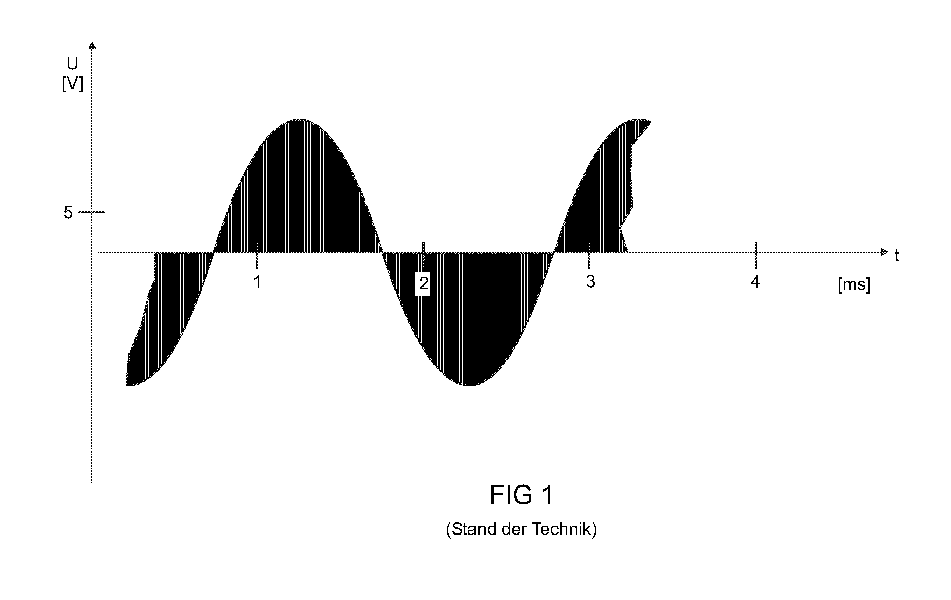

**Fig. 1** zeigt die typische Ausgangsspannung, wie sie von einem elektronischen Transformator für Niedervolthalogenlampen ausgegeben wird. Die Spannung weist einen niederfrequenten amplitudenmodulierten Anteil und einen hochfrequenten Anteil auf. Die Spannung stellt im Prinzip eine hochfrequente Rechteckspannung dar, die als Hüllkurve eine niederfrequente sinusförmige Spannung aufweist. Die Frequenz der hochfrequenten Rechteckspannung ist in etwa um den Faktor 500-1000 höher als die der einhüllenden niederfrequenten sinusförmigen Spannung.

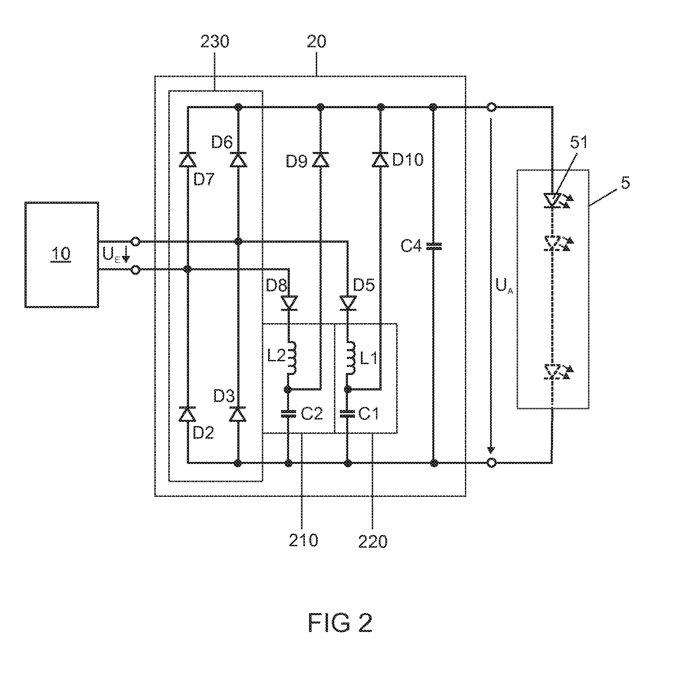

**Fig. 2** zeigt eine Schaltungsanordnung 20 zum Umwandeln einer Amplitudenmodulierten Eingangswechselspannung in eine Gleichspannung in einer ersten Ausführungsform. Diese erste Ausführungsform ist eine passive Ausführungsform ohne gesteuerte Bauelemente. Die Schaltungsanordnung 20 weist einen Eingang auf, an den eine Wechselstromquelle 10 angeschlossen ist. Diese Wechselstromquelle 10 kann z.B. einelektronischer Transformator für Niedervolthalogenlampen sein. Die Wechselstromquelle 10 kann aber ebenfalls ein konventioneller Transformator für Niedervolthalogenlampen sein. Der Eingang ist an die Wechselspannungsseite eines Vollwellengleichrichters 230 angeschlossen, der aus den Dioden D2, D3, D6 und D7 besteht. Ein Kondensator C4 ist parallel zum Gleichspannungsausgang des Vollwellengleichrichters 230 angeschlossen. Der negative Pol des Gleichspannungsausgangs ist das Bezugspotential und wird im folgenden auch als Masse bezeichnet. Parallel zum Kondensator C4 wird die (kapazitive) Last 5 angeschlossen, die z.B. aus einer oder mehreren Leuchtdioden 51 bestehen kann. Die Last 5 kann aber ebenfalls aus einer Schaltungsanordnung bestehen, die wiederum eine oder mehrere Leuchtdioden 51 betreibt.

An je einen Pol des Eingangs der Schaltungsanordnung ist ein Speicherkreis 210, 220 angeschlossen, dessen anderer Pol auf Masse liegt. Der Speicherkreis 210, 220 besteht im wesentlichen aus einer Serienschaltung einer Induktivität und einer Kapazität. Zwischen Speicherkreis und Wechselspannungseingang ist je eine Diode D5, D8 geschaltet, die eine Gleichrichtung der Eingangsspannung bewirkt. Je eine weitere Diode D9, D10 ist zwischen den Verbindungspunkt der Kapazität und der Induktivität und dem positiven Ausgang des Vollwellengleichrichters 230 geschaltet.

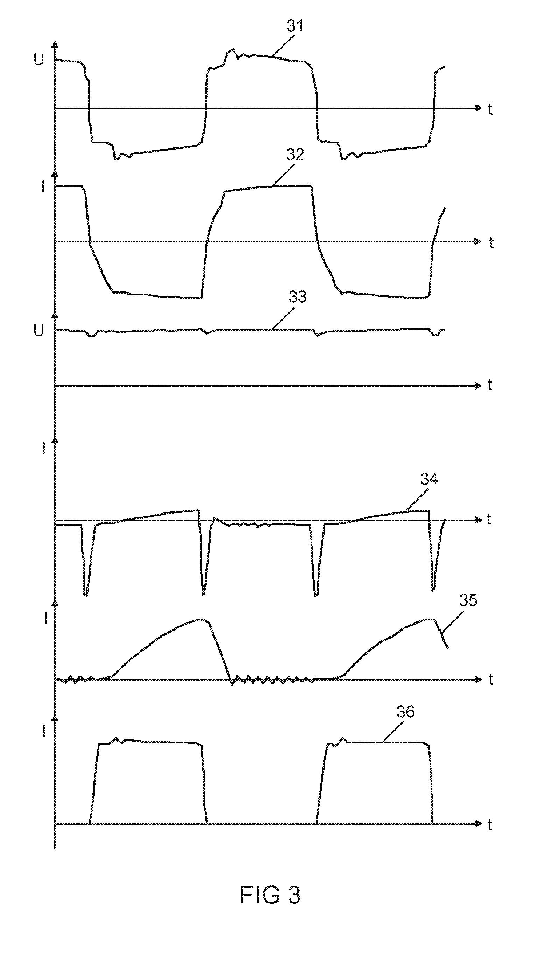

**Fig. 3** zeigt einige wichtige Spannungs- und Stromverläufe der Schaltungsanordnung 20, die die Arbeitsweise der Schaltung veranschaulichen. Die Kurven sind zeitlich alle gleich aufgelöst, so dass sich die Arbeitsweise aus der Lage der Kurven zueinander erschließt. Die Kurve 31 zeigt die Eingangsspannung der Schaltungsanordnung 20, wie sie z.B. von einem elektronischen Trafo bereitgestellt wird. Die Zeitachse ist so gewählt, dass die hochfrequente Rechteckspannung, nicht aber deren einhüllende niederfrequente sinusförmige Spannung sichtbar ist. Die Kurve 32 zeigt den Eingangsstrom der Schaltungsanordnung 20. Es ist gut zu erkennen, dass die Schaltungsanordnung 20 eine resistive Last darstellt, die eine gleichmäßige, der Spannung folgende Stromaufnahme generiert. Die erfindungsgemäße Schaltungsanordnung versorgt die Last 5 über zwei Pfade mit Energie. Jeder dieser Pfade ist doppelt ausgelegt, um in der positiven Halbwelle und in der negativen Halbwelle getrennt wirken zu können. Insgesamt weist die erfindungsgemäße Schaltungsanordnung also 4 Pfade auf, von denen jeweils 2 identisch sind und sich nur darin unterscheiden, dass sie jeweils nur in der positiven beziehungsweise negativen Halbwelle aktiv sind. In der Kurve 33 ist die Spannung über einem der Speicherkondensatoren C1 oder C2 dargestellt. Die Spannung zeigt im Verlauf kleine Dellen bei jedem Kommutieren der Eingangsspannung 31. Diese kleinen Dellen sind jedoch nur aufgrund der schlechten zeitlichen Auflösung der dargestellten Spannung kleine Dellen. In Wirklichkeit wird der Kondensator beim Kommutieren für kurze Zeit komplett entladen, um dann nach dem Kommutationszeitpunkt gleich wieder aufgeladen zu werden. Dadurch findet ein Stromfluss kurz nach der Kommutierung statt, was eine gleichmäßigere Belastung der Stromversorgung zur Folge hat. Der Stromfluss ist in der Kurve 34 dargestellt, die den Strom durch den Kondensator C1 oder den Kondensator C2 zeigt. Die Kurve 35 zeigt den Stromfluss durch die Induktivität L1. Der gleiche Stromfluss ereignet sich um eine Halbwelle versetzt in der Induktivität L2. Durch die Diode D5 und die Induktivität L1 wird der Kondensator C1 aufgeladen. Zum Zeitpunkt der Kommutierung fließt die in der Drossel gespeicherte Energie in den Kondensator. Die Kurve 36 schließlich zeigt den Strom durch die Diode D6, die zum zweiten Strompfad gehört. Die Diode D6 ist eine der Dioden des Vollwellengleichrichters 230. Hier ist zu sehen, dass dieser Strompfad, in dem die Energie von der Stromversorgung 10 über den Vollwellengleichrichter 230 in die Last 5 fließt, die Hauptenergie während einer Halbwelle liefert. In der anderen Halbwelle liefert dann der komplementäre Strompfad über die Diode D7 die Energie. Während der Kommutierung kann aufgrund der fehlenden treibenden Spannung der Strompfad keine Energie liefern, daher übernimmt während der Kommutierung der Strompfad mit dem Speicherkreis die Energieversorgung.

Durch das Kombinieren von direkter Energieversorgung über die Dioden D6 und D7 und die Energieversorgung über die Speicherkreise 210 und 220 und die Dioden D9 und D10 wird eine resistive Lastaufnahme der Schaltungsanordnung erreicht, auch wenn die Last 5 kein resistives Verhalten zeigt.

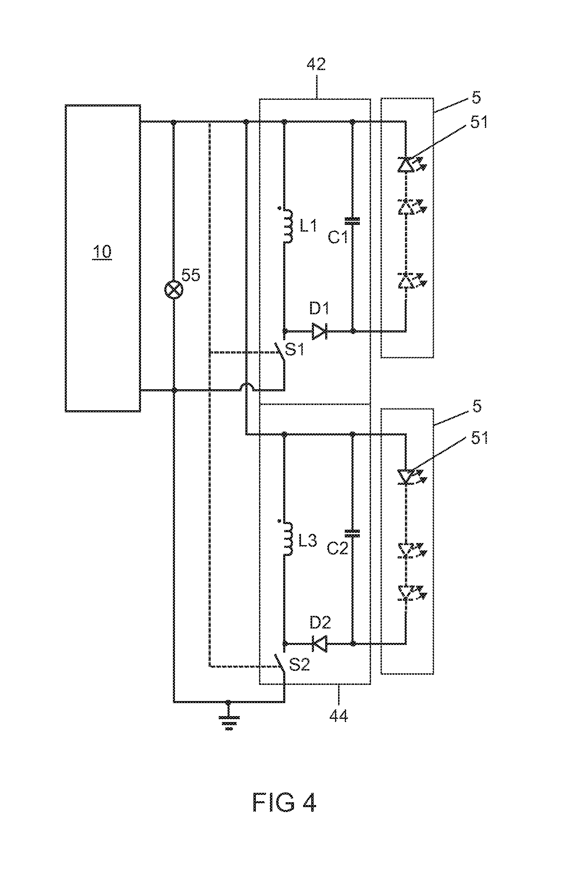

**Fig. 4** zeigt ein schematisches Schaltbild einer Schaltungsanordnung zum Umwandeln einer Amplitudenmodulierten Eingangswechselspannung in eine Gleichspannung in einer ersten Ausbildung einer zweiten Ausführungsform mit einer zweigeteilten Last. Die zweite Ausführungsform der erfindungsgemäßen Schaltungsanordnung baut auf einem aktiven Prinzip auf, um eine resistive Lastaufnahme zu erreichen. Die zweite Ausführungsform der Schaltungsanordnung macht sich ebenso die Tatsache zu nutze, dass elektronische Transformatoren kein Gleichstromsignal zur Verfügung stellen, sondern ein mit einer hohen Frequenz getaktetes Wechselstromsignal. Die erfindungsgemäße Schaltungsanordnung enthält zwei unabhängige, Buck-Boost Wandler 42, 44, die unmittelbar vom Ausgangssignal, also dem mit einer hohen Frequenz getaktetem Wechselstromsignal des elektronischen Transformators 10 gesteuert werden und komplementär zueinander arbeiten. Die Gleichspannungswandler stellen über die Dioden D1 beziehungsweise D2 sowie die Kondensatoren C1 beziehungsweise C2 eine geglättete Ausgangsspannung zur Verfügung, an die eine Last 5 in Form von einer oder mehrerer Leuchtdioden 51 anschließbar ist. Durch die Auslegung der Wandler ist eine inhärente Strombegrenzung gegeben, so dass keine weiteren strombegrenzenden Bauelemente mehr notwendig sind. Im Schaltbild ist beispielhaft eine Niedervolt-Halogenlampe 55 zur erfindungsgemäßen Schaltungsanordnung angeordnet.

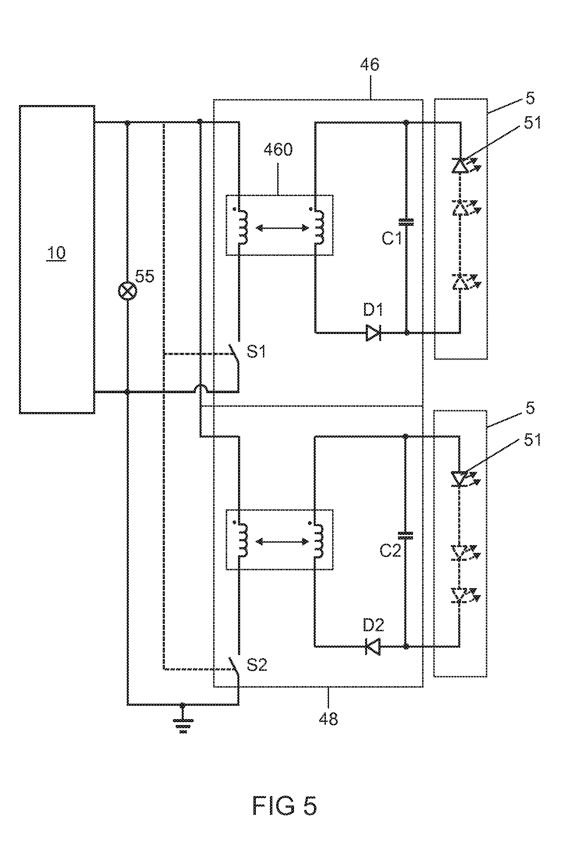

**Fig. 5** zeigt ein schematisches Schaltbild einer Schaltungsanordnung zum Umwandeln einer Amplitudenmodulierten Eingangswechselspannung in eine Gleichspannung in einer zweiten Ausbildung einer zweiten Ausführungsform mit einer zweigeteilten Last 5. Die zweite Ausbildung verwendet anstatt der Buck-Boost Wandler 42, 44 zwei Sperrwandler 46, 48, auch als Flyback Wandler bezeichnet, die die eine oder mehreren Leuchtdioden 51 der Last 5 mit Energie versorgen. Die Ausführung als Sperrwandler hat zwei Vorteile: Durch den Transformator 460, 480 der Sperrwandler 46, 48 ist die Last Potentialgetrennt, und es ergeben sich dadurch Vorteile beim mechanischen Aufbau und der Kühlung der Leuchtdioden. Durch die höhere Ausgangsspannung der Sperrwandler können mehrere Leuchtdioden in Serie geschaltet werden, als dies bei der ersten Ausbildung der zweiten Ausführungsform der Fall ist. Dadurch sind mehrere Leuchtdioden 51 betreibbar und höhere Leistungen realisierbar.

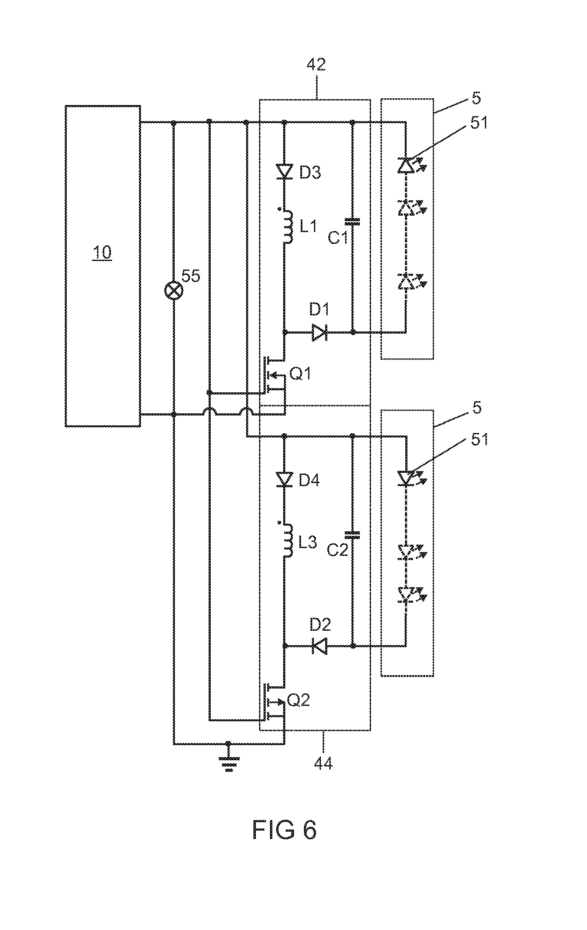

**Fig. 6** zeigt ein Schaltbild einer Schaltungsanordnung zum Umwandeln einer Amplitudenmodulierten Eingangswechselspannung in eine Gleichspannung in einer ersten Ausbildung einer zweiten Ausführungsform mit einer zweigeteilten Last und einem Transistor als Schalter. Die Transistoren der beiden Wandler müssen dabei komplementäre Typen sein, damit die beiden Wandler komplementär zueinander arbeiten. Die Wandler weisen jeweils eine Entkopplungsdiode D3 beziehungsweise D4 auf, die verhindert dass die in die Transistoren integrierten Body-Dioden leitend werden. Dies wiederum stellt sicher, dass die Drosseln L1 beziehungsweise L3 ihre Ladung jeweils an die Last 5 abgeben. Die Schaltungsanordnung verwendet das Ausgangssignal des elektronischen Transformators 10 direkt als Eingangssignal für die Transistoren. Dies vereinfacht die Schaltung erheblich, so dass sie sehr kostengünstig hergestellt werden kann.

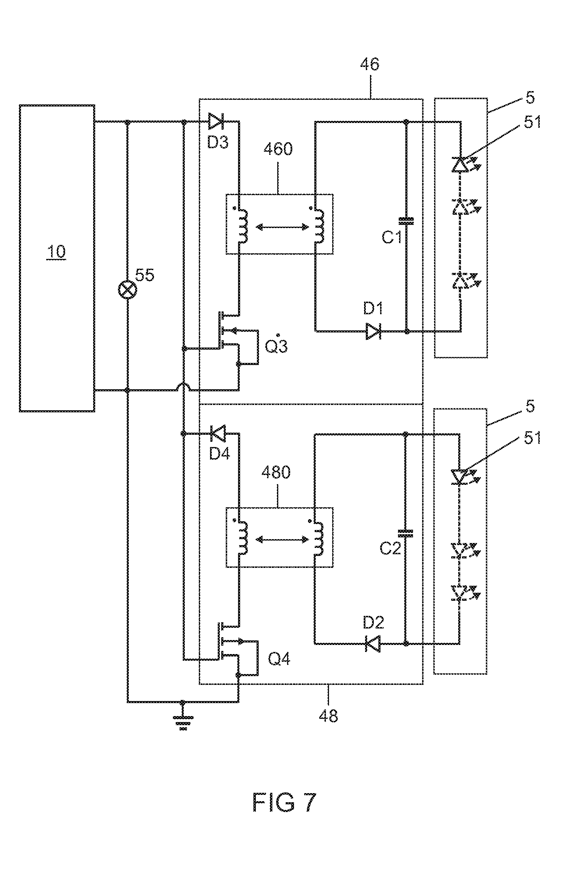

**Fig. 7** zeigt ein Schaltbild einer Schaltungsanordnung zum Umwandeln einer Amplitudenmodulierten Eingangswechselspannung in eine Gleichspannung in einer zweiten Ausbildung einer zweiten Ausführungsform mit einer zweigeteilten Last und einem Transistor als Schalter. Auch hier müssen die Transistoren der beiden Sperrwandler 46, 48 dabei komplementäre Typen sein, damit die beiden Sperrwandler 46, 48 komplementär zueinander arbeiten. Die Sperrwandler 46, 48 weisen jeweils eine Entkopplungsdiode D3 beziehungsweise D4 auf, die verhindert dass die in die Transistoren integrierten Body-Dioden leitend werden. Dies bewirkt, dass sich die Transformatoren 460, 480 der beiden Sperrwandler 46, 48 über ihre jeweiligen Sekundärwicklungen entmagnetisieren, und somit die Energie zur Last fließen kann. Auch die zweite Ausbildung verwendet das Ausgangssignal des elektronischen Transformators 10 direkt als Eingangssignal für die Transistoren Q3 und Q4. Dies vereinfacht die Schaltung ebenfalls erheblich, so dass sie sehr kostengünstig hergestellt werden kann.

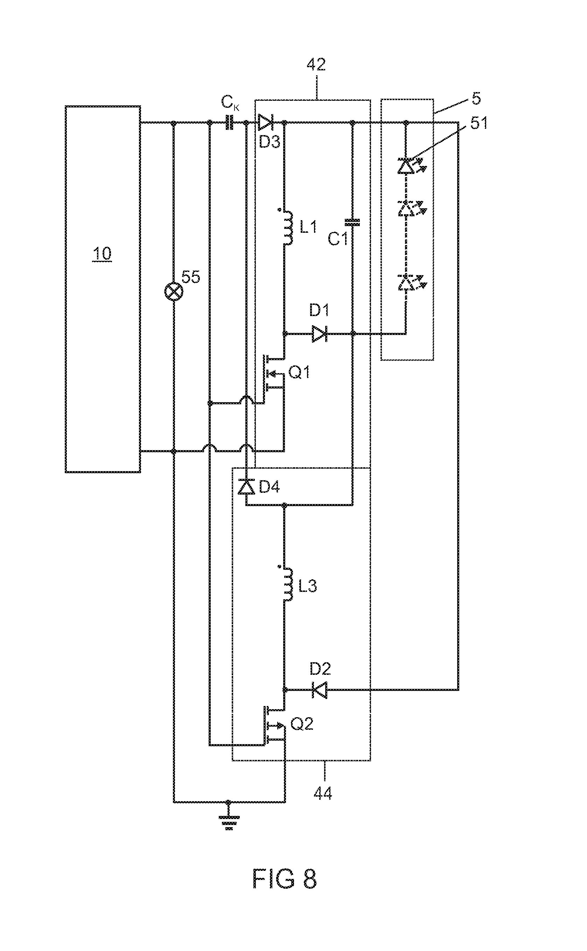

**Fig. 8** schließlich zeigt ein Schaltbild einer Schaltungsanordnung zum Umwandeln einer Amplitudenmodulierten Eingangswechselspannung in eine Gleichspannung in einer ersten Ausbildung einer zweiten Ausführungsform mit einer einteiligen Last und einem Transistor als Schalter. Hier wirken beide Drosseln wechselseitig auf den Stützkondensator C1. Parallel zum Stützkondensator ist die Last 5 mit den Leuchtdioden 51 geschaltet. Die beiden Buck-Boost Wandler weisen an ihrem Eingang einen Koppelkondensator Cₖ auf, der sicherstellt, dass der Betrieb der erfindungsgemäßen Schaltungsanordnung an einem konventionellen Transformator keine Schäden verursacht. Die beiden Dioden D3 und D4 dienen wiederum der Entkopplung der Dioden vom Eingang

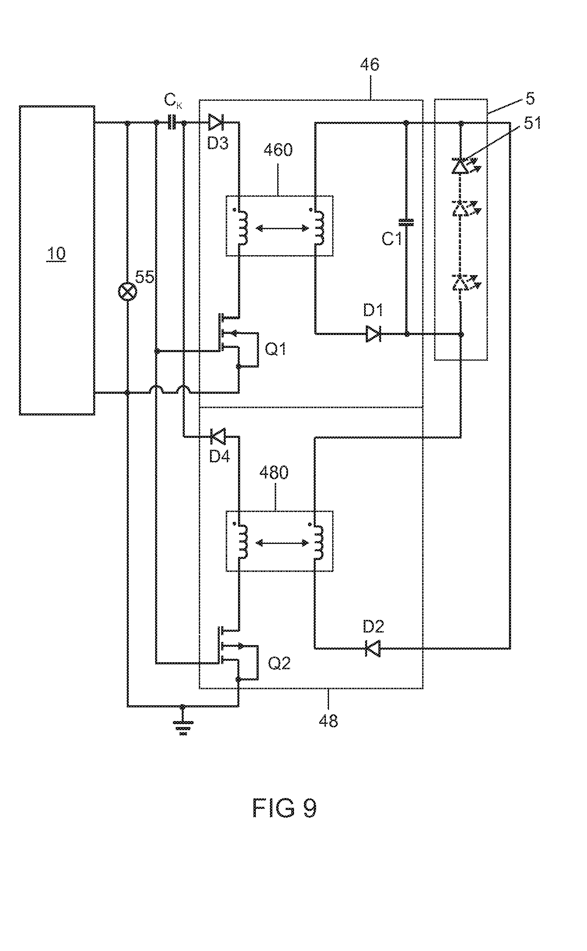

**Fig. 9** zeigt ein Schaltbild einer Schaltungsanordnung zum Umwandeln einer Amplitudenmodulierten Eingangswechselspannung in eine Gleichspannung in einer zweiten Ausbildung einer zweiten Ausführungsform mit einer einteiligen Last und einem Transistor als Schalter. Die Ausgänge der beiden Sperrwandler 46, 48 wirken hier beide auf den Speicher- oder Stützkondensator C1, dem wieder die Last 5 mit den Leuchtdioden 51 parallelgeschaltet ist. Auch hier dient wieder ein Koppelkondensator Cₖ der Entkopplung der erfindungsgemäßen Schaltungsanordnung mit einem vorgeschalteten Transformator.

### Bezugszeichenliste:

- 10: Wechselstromquelle
- 20: erfindungsgemäße Schaltungsanordnung
- 230: Vollwellengleichrichter
- 210: Speicherkreis
- 220: Speicherkreis
- 31: Eingangsspannung der Schaltungsanordnung
- 32: Eingangsstrom der Schaltungsanordnung
- 33: Spannung über dem Kondensator C1 beziehungsweise C2
- 34: Strom durch den Kondensator C1 beziehungsweise C2
- 35: Strom durch die Induktivität L1 beziehungsweise L2
- 36: Strom durch die Diode D6 beziehungsweise D7
- 42: Buck-Boost Wandler
- 44: Buck-Boost Wandler
- 46: Sperrwandler
- 460: Sperrwandlertransformator
- 48: Sperrwandler
- 480: Sperrwandlertransformator
- 5: Last
- 51: Leuchtdioden
- 55: Niedervolt-Halogenlampe

## Patentansprüche

1. Schaltungsanordnung (20) zum Umwandeln einer Eingangswechselspannung (U_{E}) in eine Gleichspannung (U_{A}), mit einem Eingang, in den die Eingangswechselspannung (U_{E}) eingegeben wird, und einem Ausgang, an den eine Last (5) anschließbar ist, **dadurch gekennzeichnet, dass** die Schaltungsanordnung (20) einen ersten und einen zweiten Speicherkreis (210, 220) mit je mindestens einer Induktivität (L1, L2)und je mindestens einer Kapazität (C1, C2), sowie ein Diodennetzwerk aufweist.

2. Schaltungsanordnung (20) nach Anspruch 1, **dadurch gekennzeichnet, dass** das Diodennetzwerk so gestaltet ist, dass der erste Speicherkreis (220) jeweils bei der positiven Halbwelle der Eingangswechselspannung (U_{E}) geladen wird sowie bei der negativen Halbwelle der Eingangswechselspannung (U_{E}) entladen wird, und der zweite Speicherkreis (210) jeweils bei der negativen Halbwelle der Eingangswechselspannung (U_{E}) geladen wird sowie bei der positiven Halbwelle der Eingangswechselspannung (U_{E}) entladen wird.

3. Schaltungsanordnung (20) nach Anspruch 1 oder 2, **dadurch gekennzeichnet, dass** das Diodennetzwerk einen Vollwellengleichrichter (230) aufweist, der wechselspannungsseitig mit dem Eingang und gleichspannungsseitig mit dem Ausgang verbunden ist.

4. Schaltungsanordnung (20) zum Umwandeln einer Eingangswechselspannung (U_{E}) in eine Gleichspannung (U_{A}), mit einem Eingang, in den die Eingangswechselspannung (U_{E}) eingegeben wird, und einem Ausgang, an den eine Last (5) anschließbar ist, **dadurch gekennzeichnet, dass** die Schaltungsanordnung (20) zwei Spannungswandler (42, 44) aufweist, in die die Eingangswechselspannung (U_{E}) eingegeben wird, und die Spannungswandler in Bezug auf die Eingangswechselspannung (U_{E}) komplementär arbeiten und synchron mit ihr getaktet sind.

5. Schaltungsanordnung (20) nach Anspruch 1, **dadurch gekennzeichnet, dass** die Spannungswandler (42, 44) Sperrwandler sind.

6. Schaltungsanordnung (20) nach einem der Ansprüche 1 oder 2, **dadurch gekennzeichnet, dass** die Spannungswandler (42, 44) Inverswandler sind.

7. Schaltungsanordnung (20) nach einem der vorhergehenden Ansprüche, **dadurch gekennzeichnet, dass** die zwei Spannungswandler (42, 44) je einen Schalter (S1, S2) aufweisen, der als Transistor ausgebildet ist.

8. Schaltungsanordnung (20) nach Anspruch 5, **dadurch gekennzeichnet, dass** die Transistoren der zwei Spannungswandler (42, 44) zueinander komplementär sind.

9. Nachrüstlampe mit mindestens einer Halbleiterlichtquelle zum Betreiben an einer Wechselspannung, **dadurch gekennzeichnet, dass** die Nachrüstlampe eine Schaltungsanordnung (20) nach einem der Ansprüche 1-3 oder einem der Ansprüche 4-8 aufweist, wobei der Eingang der Schaltungsanordnung (20) mit der Wechselspannung verbunden ist, und am Ausgang der Schaltungsanordnung (20) eine Spannung (U_{A}) zum Betreiben der mindestens einen Halbleiterlichtquelle anliegt.

10. Nachrüstlampe nach Anspruch 9, **dadurch gekennzeichnet, dass** die Halbleiterlichtquelle eine Leuchtdiode (51) oder eine organische Leuchtdiode ist.

11. Nachrüstlampe nach Anspruch 9 oder 10, **dadurch gekennzeichnet, dass** die Nachrüstlampe an einer hochfrequenten Wechselspannung betreibbar ist, die von einem elektronischen Transformator für Niedervolt-Halogenlampen bereitgestellt wird.

12. Beleuchtungssystem mit einem elektronischen Transformator für Niedervolt-Halogenlampen, **dadurch gekennzeichnet, dass** das Beleuchtungssystem eine Nachrüstlampe nach Anspruch 9 aufweist, wobei die Nachrüstlampe an den elektronischen Transformator für Niedervolt-Halogenlampen angeschlossen ist.
